# EUROPEAN PATENT APPLICATION

(11) **EP 1 916 612 A2**
(43) Date of publication of application: **30.04.2008**
(21) Application number: 07119258.7
(22) Date of filing: 25.10.2007
(51) Int. Cl.: G06F 21/00

(54) **Autonomous field reprogramming**

(30) Priority: 27.10.2006 US 863239 P; 22.10.2007 US 876694
(71) Applicant: Delphi Technologies, Inc., Troy, Michigan 48007 (US)
(72) Inventor: Brunts, Randall T., Carmel, IN 46033 (US); Packard, Julanne L., Kokomo, IN 46902-6807 (US); Zhou, Ting N., Kokomo, IN 46902 (US); Kellogg, Kristin D., Indianapolis, IN 46220 (US)
(74) Representative: Denton, Michael John

(57) **Abstract**

The reprogramming system (100) provides for field reprogramming of programmable devices (108). In particular, a key encryption system (102) generates reprogramming components (104) used to install reprogram data (110) on programmable devices (108) located in the field. The reprogramming component (104) includes an encrypted access key file (112) necessary to unlock the programmable device (104) and reprogram software files (110) and data installed on the programmable device (108). The encrypted access key file (112) is encrypted as a function of a check value derived from the reprogram data (110), ensuring that permission to reprogram the programmable device (108) is tied to the specific data being installed. A key decryption system (106) that receives a reprogramming component (104) generates the check value from the program data (110), decrypts the key access file (112), unlocks the programmable device (108), and installs the software files and/or program data (110).

## Description

### TECHNICAL FIELD

The subject matter described herein relates to programmable electronic devices, and in particular to systems and methods for installing data in programmable electronic devices in the field.

### BACKGROUND OF THE INVENTION

Programmable electronics devices such as electronic control units (ECUs) have become ubiquitous in today's world. In addition to general purpose computers, programmable electronic devices, also referred to herein as programmable devices, are utilized in a variety of products such as automobiles, smart phones, television sets, toys, and any number of other products. In particular, programmable electronic devices or ECUs, are used to control electrical systems of a motor vehicle, such as the sound system, airbag deployment system, door locks, engine controller, restraint system, occupant sensing modules, and the like.

One of the advantages of programmable electronic devices is that they can be reprogrammed to take advantage of new features or functions, correct defects, and/or improve performance. Programmable electronic devices include a processor programmed with the control logic that enhances performance of various systems. In certain embodiments, programmable electronic devices are utilized in conjunction with one or more sensors and actuators to control various systems. Reprogramming allows programmable electronic devices to adapt to conditions not originally predicted. Reprogramming in the field is more convenient than return of the programmable electronic devices to the manufacturer and decreases the expense of updating programmable electronic devices. For example, an update to an ECU in an automobile will be significantly less expensive if the reprogramming is performed at various dealerships, auto garages and the like without requiring removal of the ECU and/or return of the ECU to the manufacturer. However, it is important that such changes be controlled to ensure that the updated devices are not rendered dangerous, unsafe, or illegal.

One of the hurdles to reprogramming programmable electronic devices is that programmable electronic devices are typically locked to prevent unauthorized access to the control algorithms and any proprietary data (collectively, "software files") that may be stored inside the programmable electronic device. Therefore, in order for a programmable electronic device of a specific vehicle to be reprogrammed with new or updated software files, the programmable electronic device must be unlocked. Once a programmable electronic device is unlocked, the new or updated software files are written to the programmable electronic device, resulting in the processor of the programmable electronic device executing the new software files for improved performance of the vehicle functions controlled by the programmable electronic device (e.g., sound system, lights, *etc.*).

Therefore, there is a need for a quick and efficient system and method for reprogramming programmable electronic devices in the field, e.g., at an auto garage or dealership, which allows the programmable electronic devices to be unlocked while maintaining control over the reprogramming of the software files.

### SUMMARY OF THE INVENTION

The following summary is intended to provide a simple overview as well as to provide a basic understanding of the subject matter described herein. It is not intended to describe or limit the scope of the claimed subject matter. Furthermore, this summary is not intended to describe critical or key elements of the claimed subject matter. Additional aspects and embodiments are described below in the detailed description.

Systems and methods for reprogramming of programmable devices are described herein. In particular, a key encryption system generates a reprogramming component that is used to install one or more software files or reprogram data on a programmable device located in the field. The reprogramming component includes an encrypted access key file used to unlock the programmable device for reprogramming and the software file(s) to be installed on the programmable device. In an embodiment, the encrypted access key file is encrypted as a function of a check value derived from the software file(s), ensuring that permission to reprogram the programmable device is tied to the specific software file(s) being installed. The reprogramming component is distributed to field locations for reprogramming of programmable devices.

In a further embodiment, a key decryption system at a field location receives a reprogramming component including the encrypted access key file and software files for installation on a programmable device. In an embodiment, the key decryption system generates a check value from the software files utilizing the same algorithm as the encryption system. The key decryption then decrypts the encrypted access key file utilizing the check value, if the check value is correctly computed and the software files have not been modified. In this manner, the check value acts as a verifier of the contents of the software files. Upon successful decryption of the encrypted access key file, permission is obtained to install the software files on the programmable device. In a further embodiment, the key decryption system includes a user interface and/or a logging system to report or record results of software file installation.

In another embodiment, authorization to generate reprogramming components is limited. In particular, the key encryption system includes an authorization component that determines authorization to create reprogramming components. In an embodiment, the authorization component authenticates the identity and verifies authority of the entity directing generation of a reprogramming component. In a further embodiment, a password or biometric identifier is utilized to identify the entity and/or verify authorization to create a reprogramming component. In yet another embodiment, a memory device (e.g., a flash memory card or drive) is used as a dongle or key to authorize creation of reprogramming components.

### BRIEF DESCRIPTION OF THE DRAWINGS

The claimed subject matter is described with reference to the accompanying drawings. In the drawings, like reference numbers indicate identical or functionally similar elements. Additionally, the left-most digit(s) of a reference number identifies the drawing in which the reference number first

FIG. 1 is block diagram of a system that performs controlled reprogramming of a programmable device in accordance with an aspect of the subject matter described herein.

FIG. 2 is a block diagram of a system that generates a reprogramming component in accordance with an aspect of the subject matter described herein.

FIG. 3 is a block diagram of a system that performs reprogramming using a reprogramming component in accordance with an aspect of the subject matter described herein.

FIG. 4 is a block diagram of another system that performs reprogramming using a reprogramming component in accordance with an aspect of the subj ect matter described herein.

FIG. 5 is a perspective view of a reprogramming device in accordance with an aspect of the subject matter described herein.

FIG. 6 is a flowchart illustrating a methodology for generating a reprogramming component in accordance with an aspect of the subject matter described herein.

FIG. 7 is a flowchart illustrating a methodology for reprogramming a programmable device utilizing a reprogramming component in accordance with an aspect of the subject matter described herein.

FIG. 8 is a flowchart illustrating another methodology for reprogramming a programmable device utilizing a reprogramming component in accordance with an aspect of the subject matter described herein.

### DESCRIPTION OF THE PREFERRED EMBODIMENTS

Programmable devices are used in a variety of purposes and included in a wide array of products. The programmable devices are commonly locked to prevent unauthorized reprogramming. Reprogramming is typically restricted due to safety concerns. For example, programmable devices are used in vehicles to control engine performance and other systems. Faulty programming of such devices could result in degraded performance of the automobile and even increase the possibility of accident or other mishap. Even if the programmable device is utilized in a system where safety is not an issue, improper programming can introduce errors and affect the manufacturer's and the product's reputation. In addition, if the programmable device is not secured, individuals can reverse engineer programmable device control algorithms or modify programmable device data values. Consequently, manufacturer's may face loss of reputation, loss of intellectual property, or even legal claims as a result of failing to properly secure the programmable device.

Typically, programmable devices are secured with a key value required to unlock the programmable device for reprogramming. Generally, the manufacturer of the electronic device, or the product in which the electronic device is a component, maintains control of the key value to manage reprogramming. Technicians or other technical support person are often responsible for reprogramming programmable devices; however, such individuals are not normally entrusted with the key values. For example, car or part manufacturers perform initial programming of programmable devices in vehicles. However, the manufacturer is unlikely to be willing to provide the key value to the various dealerships that perform maintenance. There is simply too great a chance for misuse of the key value.

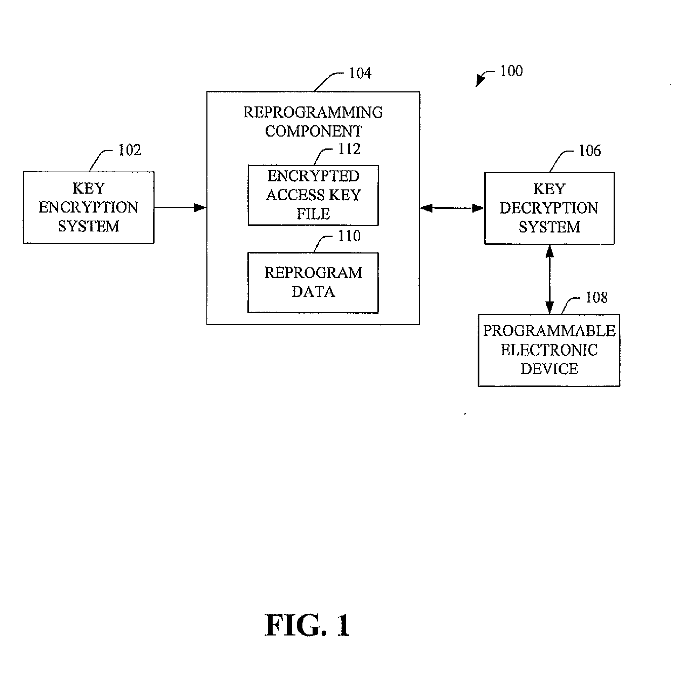

Turning now to FIG. 1, an exemplary system 100 that performs controlled installation of one or more files in a programmable electronic device (or programmable device) 108 is illustrated. As used herein, the term "exemplary" indicates a sample or example. It is not indicative of preference over other aspects or embodiments. Specifically, a key encryption system 102 generates a reprogramming component 104 that is used to reprogram a programmable device 108. As used herein, the term "component" includes hardware, software, firmware or any combination thereof. The reprogramming component 104 contains the reprogram data 110 used in reprogramming a programmable device 108. Reprogram data 110 can include new and/or updated control algorithms, software, script files, proprietary data files or any other data. The reprogramming component 104 also contains an encrypted access key file 112 that includes a key set of one or more key values necessary to authorize reprogramming of the programmable device 108.

In an embodiment, the key encryption system 102 generates the encrypted access key file 112 utilizing a check value derived from the reprogram data 110 to perform the encryption. As a result, a key decryption system 106 receives the same check value to decrypt the encrypted access key file 112 and obtain the key values necessary to reprogram the programmable device 108. The encrypted access key file 112 is secured with a check value derived from reprogram data 110, effectively binding reprogramming of the programmable device 108 to the particular reprogram data 100 to be installed.

When update of programmable devices 108 is desired, the manufacturer can utilize the key encryption system 102 to generate reprogramming components 104 for distribution to remote locations and use in reprogramming of programmable devices 108 with the provided reprogram data 110. In certain embodiments, a reprogramming component 104 is memory that stores the reprogram data 110 and access key file 112. In another embodiment, the reprogramming component 104 is implemented using a Secure Digital (SD) memory card. In further embodiments, the reprogramming component 104 is implemented using a flash memory (e.g., a thumb drive), CD-ROM or any other suitable memory. In yet a further alternative, the reprogramming component 104 is implemented as software that includes the reprogram data 110 and access key file 112. As described in further detail below, the reprogramming component 104 is transmitted to the key decryption system 106. For example, transmission can be *via* a network, such as the internet, or *via* a wireless network.

Once generated, the reprogramming component 104 is distributed for use in updating programmable devices 108. The access key file is encrypted to prevent unauthorized personnel from utilizing the access key file to update the programmable device 108 with any files other than the valid reprogram data 110. A check value derived from the reprogram data 110 is used in an embodiment to encrypt the access key file, and is then used to decrypt the access key file 112. The algorithm used to derive the check value necessary to decrypt the access key file 112 is maintained in secrecy to prevent anyone other than the decryption system 106 from decoding and accessing the access key file 112. As a result, the reprogram data 110 is closely tied to the access key file 112. The correct check value is derived only if the reprogram data 110 remains unchanged since generation by the manufacturer.

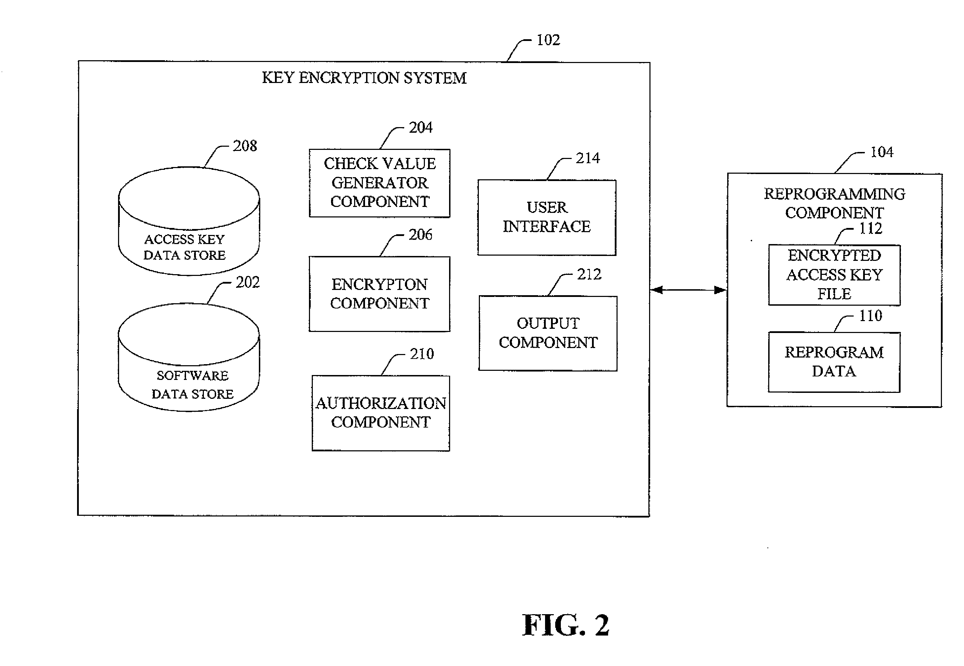

Referring now to FIG. 2, a key encryption system 102 that generates one or more reprogramming components 104 is illustrated. In certain embodiments, the key encryption system 102 includes a software data store 202.

As used herein, the term "data store" refers to a collection of data (e.g., database, file or cache). The software data store 202 can include program executable code, scripts, data or any other information to be loaded or installed on a programmable device 108. For example, the software data store 202 can include adjustments to data such as threshold values utilized by the control logic in a programmable device 108. In other embodiments, the software data store 202 can include updated logic to be installed in the programmable device 108, modifying or overwriting the current control logic of the programmable device 108. The control logic is created by conventional means on a computer using standard programming practices and languages (e.g., C, C#, C++, or Java). The software data store 202 may be created by the manufacturer of the programmable device 108 or product containing the programmable device 108. For example, software data store 202 may be created by a vehicle manufacturer, such as General Motors, or a system manufacture, such as Delphi Technologies.

A check value generator component 204 generates a check value as a function of the reprogram data 110 to be installed using the reprogramming component 104. In an embodiment, the check value is generated according to an encryption algorithm based on the content of reprogram data 110 to be installed. Any suitable encryption algorithm can be utilized to generate the check value. In an embodiment, a hash function is used to compute the check value. As used herein, a hash function is a method of generating a hash value based upon a data set, where the hash value serves as a fingerprint or verifier of the contents of the data. The hash function is applied to the reprogram data 110 to generate the hash value. In other embodiments, the hash function is a one-way function, such that there is no practical way to calculate the data input that results in a certain hash value. Any change in the data file to which the hash function is applied results in a change to the hash value, allowing people to determine if the initial data file has been changed. The check value generator 204 can utilize hash functions such as Message Digest 5 (MD5), Secure Hash Algorithm (SHA-1), RACE Integrity Primitives Evaluation Message Digest (RIPEMD), HAVAL, N-HASH and the like to generate a check value based upon the software files being installed. The resulting check value is used to verify the validity of the reprogram data 110.

An encryption component 206 utilizes the generated check value to encrypt key values to generate the encrypted access key file 112. In an embodiment, the key encryption system 102 includes an access key data store 208 that contains the key values for one or more programmable devices 108. The relevant key value or values are obtained and encrypted by the encryption component 206 utilizing the check value, generating the encrypted access key file 112.

Complex products, such as vehicles, often include multiple programmable devices 108. For example, separate programmable devices 108 are used to control ignition timing, variable valve timing (VVT), the level of boost maintained by a turbocharger, as well as other vehicle systems. The programmable devices 108 can utilize information obtained from various sensors (e.g., manifold absolute pressure (MAP) sensor, throttle position sensor, air temperature sensor, oxygen sensor, oil pressure sensor, coolant temperature sensor, crank angle sensor, and many others), and direct systems as a function of the obtained information.

Typically, each programmable device 108 requires a different key value to unlock the programmable device 108 for reprogramming. For example, in an automobile, a first key value may unlock the processor that controls the vehicle's sound system whereas a second key value may unlock the processor that controls the vehicle's light system. Utilizing multiple key values helps ensure the security of the various programmable devices 108. For example, the authorization may be granted to update the sound system, without permitting changes to the braking system. In an embodiment, each individual programmable device 108 or type of programmable device 108 has an associated key identifier that corresponds to a particular key value that can be used to reprogram that programmable device 108. One or more key values are maintained in a single data file, referred to herein as the access key file. Therefore, in certain embodiments, to unlock a programmable device 108, the programmable device 108 is queried for its key identifier. Then, the retrieved key identifier is used to access the access key file and obtain the corresponding key value. For example, a look up table of associated keys is maintained in the access key file. The identifier serves as an index to retrieve the key value.

In another embodiment, the key identifier is used to select relevant portions of the reprogram data 110 for the particular type of programmable device 108. The reprogram data 110 can include scripts, software files or programmable code, data files or any other information and may include data for multiple types or classes of programmable devices 108. The key identifier is utilized to select the appropriate data, software or script for installation on the programmable device 108.

The encryption component 206 encrypts the access key file using an encryption scheme with the unique check value as an input to the encryption scheme, resulting in the generation of an encrypted access key file 112 that is unreadable to any unauthorized user. Any encryption algorithm can be used to encrypt the access key file. In an embodiment, the encryption component 206 utilizes the check value derived from the reprogram data 110 and an encryption algorithm, such as Advanced Encryption Standard (AES), Blowfish, Data Encryption Standard (DES) or the like, to generate the encrypted access key file 112.

As a result of this encryption, the encrypted access key file 112 is locked *(via* the check value) to the specific reprogram data 110 that will be reprogrammed into the target processor of the programmable device 108. Therefore, an encrypted access key file 112 can only be used to unlock the target programmable device 108 for reprogramming with the authorized reprogram data 110. The encrypted access key file 112 cannot be correctly decrypted for the reprogramming of any other generated reprogram data or other software files. Any change to the reprogram data 110 subsequent to creation of the reprogramming component 104 by the key encryption system 102 will result in a change to the check value derived from the reprogram data 110. The modified check value cannot be used to decrypt the encrypted access key file 112 and the programmable device 108 will remain locked. Consequently, the check value verifies that the reprogram data 110 remains unchanged since creation of the reprogramming component 104 by the key encryption component 102.

The encrypted access keys files 112 can be safely placed into the public domain, such as provision to a service technician, with no security risk, which provides a means for a programmable device 108 to be unlocked for reprogramming with reprogram data 110 without compromising algorithms and data files developed by the programmable device's 108 manufacturer.

In certain embodiments, the key encryption 102 system includes an authorization component 210 that controls creation of reprogramming components 104. Since reprogramming components 104 have the capability of updating programmable devices 108, it is important to control or limit the creating of reprogramming components 104, ensuring that programmable devices 108 are updated properly. The authorization component 210 verifies that the individual or entity requesting generation of a reprogramming component 104 has the appropriate authority to do so. In an embodiment, the authorization component 210 requires a pass code, biometrics (e.g., fingerprint, retina, iris, signature, voice, image or facial recognition or the like) or other indicia of authority.

In yet another embodiment, the authorization component 210 requires presence of a hardware key or security devices, also referred to as a dongle (not shown), prior to generating a reprogramming component 104. The authorization component 210 detects a hardware key. In an embodiment, the hardware key utilizes a USB interface. In an embodiment, the hardware key is implemented using memory card, such as a SD memory card. In the one embodiment, the authorization SD card is a conventional SD card having memory and circuitry allowing data to be retrieved from and/or written to the reprogramming component 104 only when the appropriate hardware key is detected.

In certain embodiments, the hardware key contains a computer authorization code which is read by the authorization component 210. In another embodiment, the computer authorization code is the encoded serial number associated with the specific hardware key. Consequently, if an individual or entity attempts to copy a computer authorization code from a first hardware key to a second hardware key, the authorization component 210 would detect a mismatch of the computer authorization code and the hardware key, thereby preventing the use of the copied hardware key. Therefore, the hardware key acts as a dongle, or key, for authorizing the encryption of the access key file 112 and generation of a reprogramming component 104.

The key encryption system 102 includes an output component 212 that outputs the reprogram data 110 and encrypted access key file 112. In one embodiment, the reprogramming component 104 is implemented as a storage device containing the encrypted access key file 112 and the reprogram data 110. The output component 212 writes or stores the encrypted access key file 112 and reprogram data 110 to the reprogramming component 104. In one particular embodiment, the reprogramming component 104 is implemented as an SD card. In still other embodiments, the reprogramming component 104 is implemented using a CD-ROM, disk drive, tape drive, flash memory or any other storage device. The output component 212 can be implemented as a USB port, serial port, disk drive, CD-ROM drive or other device for writing data to memory.

Once the encrypted access key file 112 and reprogram data 110 are stored on the reprogramming component 104, the reprogramming component 104 is distributed in the public domain while maintaining the security of the programmable devices 108. For example, manufacturers can provide reprogramming components 104 to the technicians or repair personnel to update the programmable devices 108. In particular, car manufacturers or part manufacturers can distribute the reprogramming components 104 to auto repair technicians and dealerships to facilitate secure update of programmable devices 104.

In an alternative embodiment, reprogramming components 104 are implemented as data or files that are transmitted to a key decryption system 106 for reprogramming of a programmable device 108. In this embodiment, instead of distribution of multiple hardware devices containing the encrypted access key file 112 and reprogram data 110, the output component 212 transmits the reprogramming component 104 to field locations for installation. For example, the reprogramming component 104 is transmitted *via* the Internet, or any other communication network. In yet another embodiment, reprogramming components 104 is made available to installation technicians through secure websites. For example, auto dealerships, mechanics or other reprogramming distributors can download the reprogramming component 104 for use in updating programmable devices 108.

In certain embodiments, the key encryption component 102 includes a user interface 214. The user interface 214 can be implemented utilizing a variety of input and/or output devices. An operator can direct generation of a variety of reprogramming components 104 *via* the user interface 214. In addition, the operator can verify authorization by entering a pass code or other information *via* the user interface 214. In other embodiments, an operator can control distribution of reprogramming components 104 using the user interface 214. For example, the operator approves transmission of the reprogramming component to installation technicians.

In an embodiment, the user interface 214 includes a monitor that displays data regarding success or failure of generating reprogramming component 104, the reprogram data 110 utilized to generate the reprogramming components 104, the algorithm utilized for encryption of the key access file 112 or generation of the check value. Input devices can include a keyboard, mouse, trackball, pointer or any other input device.

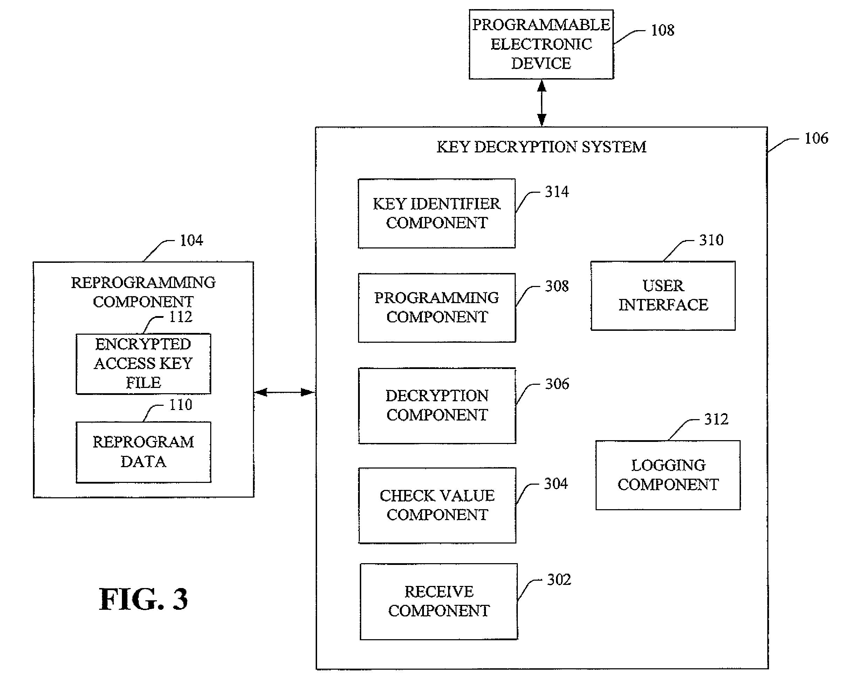

Turning now to FIG. 3, an exemplary key decryption system 106 is illustrated. The key decryption system 106 includes a receive component 302 that receives or obtains the encrypted access key file 112 and reprogram data 110 from a reprogramming component 104. In an embodiment, the reprogramming component 104 is implemented as hardware including memory and the receive component 302 reads the encrypted access key file 112 and reprogram data 110 from the reprogramming component 104. The receive component 302 can be implemented using a USB port, CD-ROM drive, disk drive, tape drive or any other hardware, software and/or firmware capable of receiving or retrieving data from the reprogramming component 104.

The check value component 304 generates a check value using the same scheme or algorithm as the check value generation component 204 of the key encryption system 102. If the reprogram data 110 was read and processed correctly, the check value calculated by the decryption system 106 is the same as the check value calculated by the key encryption system 102. If there is an error in reading the reprogram data 110, or the reprogram data 110 has been otherwise tampered with, then the check value calculated by the key decryption system 106 is not the same as the check value calculated by the key encryption system 102. Under those circumstances, the key decryption system 106 is unable to decrypt the encrypted access file 112 and the programmable device 108 remains locked.

Many manufacturers utilize multiple programmable devices 108 with distinct key values required to unlock the various types of programmable devices 108. In such cases, the key decryption system 106 includes a key identifier component 314 that queries the programmable device 108 in question and retrieves a key identifier that specifies the type of the programmable device 108. The retrieved key identifier is stored in the programmable device 108 by the programmable device 108 manufacturer as a means for controlling access to the proprietary software files of the programmable device 108. In an embodiment, the key decryption system 106 is connected to the programmable device 108 of a vehicle *via* conventional means wherein a vehicle's programmable device 108 may require a General Motors LAN, IV-LAN or class-2 data bus, as well as many other conventional connection means. In another embodiment, the key decryption system 106 connects to the programmable electronic device 108 utilizing any suitable communication protocol, including appropriate wired and/or wireless communications. Thus, in operation, upon connecting the key decryption system 106 to a vehicle's programmable device 108, the key decryption system 106 accesses the programmable device 108 and uploads a key identifier for that specific programmable device 108.

A decryption component 306 decrypts the encrypted access key file 112 based upon the check value derived from the reprogram data 110. The encrypted access key file 112 is successfully decrypted only if the check value has been correctly derived from the reprogram data 110. Therefore, any error in reading the reprogram data 110 or modification of the reprogram data 110 results in a corruption of the check value and causes failure in decryption of the encrypted access key file 112. This ensures that the key with permission necessary to write to the programmable device 108 is available only for verified reprogram data 110.

Once the encrypted access key file 112 is successfully decrypted, a programming component 308 installs the reprogram data 110 on the programmable device 108 utilizing the permission derived from the encrypted access key file 112. In an embodiment, the key for the particular type or class of programmable device 108 is obtained based upon the key identifier retrieved from the programmable device 108. In another embodiment, the access key file 112 includes a lookup table of key values and the key identifier serves as an index into the lookup table to obtain the key required for permission to program the programmable device 108.

The programming component 308 can connect to the programmable device 108 through a wired or wireless connection (e.g., WiFi). In an embodiment, the reprogram data 110 includes scripts or instructions for installation of data on the programmable device 108. The programming component 308 programs the programmable device 108 in accordance with the reprogram data 110.

In an embodiment, the reprogram data 110 includes data, software files or information for multiple types of programmable devices 108. The programming component 308 utilizes the key identifier retrieved from the programmable device 108 to determine the relevant portions of the reprogram data 110 for the particular programmable device 108. The programming component 308 then utilizes the relevant portions of the reprogram data 110 to update the programmable device 108.

In certain embodiments, the key decryption system 106 includes or is connected to a user interface 310. The user interface 310 provides feedback to operators, such as service technicians, regarding the success or failure of installation of software files by outputting information *via* indicator lights, codes transmitted *via* ports such as a serial, infrared, or short range wireless communications interface, or graphical displays with readable codes or graphics output. The user interface 310 implemented as a graphical user interface (GUI) and can include an external display, panel or monitor that provides information pertaining to installation of reprogram data 110. In addition, operators can utilize the user interface 310 to control installation of reprogram data 110.

In an embodiment, the user interface 310 provides notice of availability of or receipt of a reprogramming component 104 for installation in a programmable device. For example, in an embodiment where reprogramming components 104 are automatically transmitted to the key decryption system 106, the user interface 310 can indicate that new reprogramming components 104 are available. The user interface 310 includes a monitor, one or more lights, LED screen, touch screen or other display mechanism that provides notice to an operator.

In another embodiment, the user interface 310 provides for user input to monitor or direct operation of the key decryption system 106. The user interface 310 includes a keyboard, mouse, trackball, pointer or other input device. Operators can utilize the input device to elect to receive or obtain reprogramming components 104 and to install software files at a programmable device 108. The user interface 310 can also be used to monitor the installation process.

In other embodiments, a logging component 312 is contained within or operably connected to the key decryption system 106. The logging component 312 stores records data related to the use of the key decryption system 106, such as numbers and types of programmable devices 108 updated, date and time of update, as well as the particular reprogramming components 104 utilized during the reprogramming process. In an embodiment, the logging component 312 is implemented by storing the data records in memory, such as CD-ROM, ROM, disk drive, flash memory, bubble memory or any other suitable memory. In another embodiment, the logging component 312 is connected to an external device, such as a hard disk drive, tape drive, CD-ROM drive, or other device capable of maintaining such records. In still another embodiment, the logging component 312 is connected to a printer or other device capable of recording data records related to reprogramming of programmable devices 108.

The key decryption system 106 can be implemented using a microprocessor, microcontroller, or central processor unit (CPU) chip and printed circuit board (PCB). Alternatively, the key decryption system 106 includes an application specific integrated circuit (ASIC), programmable logic controller (PLC), programmable logic device (PLD), digital signal processor (DSP), or the like. In addition, the key decryption system 106 can include memory, whether static memory such as erasable programmable read only memory (EPROM), electronically erasable programmable read only memory (EEPROM), flash or bubble memory, hard disk drive, tape drive or any combination of static memory and dynamic memory. The key decryption system 106 can utilize software and operating parameters stored in the memory. In some embodiments, such software is uploaded to the key decryption system 106 electronically whereby the control software is refreshed or reprogrammed or specific operating parameters are updated to modify the algorithms and/or parameters used to control generation of reprogramming components 104. For example, the encryption algorithm used to encrypt the access key file 112 can be updated. The authorization component 210 can be updated with changes to the password, or identity of users permitted to generate reprogramming components 104.

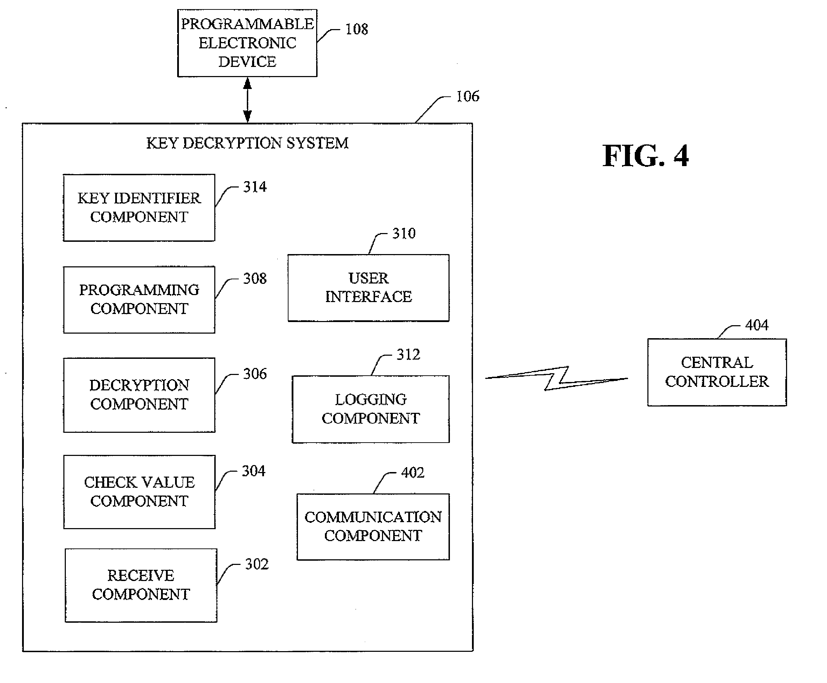

Referring now to FIG. 4, another exemplary embodiment of the key decryption system 106 is illustrated. In an embodiment, the key description system 106 includes a communication component 402. The key decryption system 106 is connected to a remote central controller 402 through the communication component 402. In another embodiment, the communication component 402 is connected to an external data modem or communication line. Alternatively, the communication component 402 is a data modem that converts the signals from the key decryption system 106 into a signal suitable for transmission over the external data link. For example, the external data modem can be a radio frequency (RF) modem such as a cellular data network typified by, but not limited to GPRS, EDGE, UMTS, 1xRTT, or EV-DO, a wireless local or wide area network, typified by IEEE 802.11x standards, an ad hoc or mesh wireless network, or alternatively, the data modem can be point-to-point. In still another embodiment, the external data modem is a wired modem connected to a wired communication line such as a traditional telephone system line, fibre optic line, a circuit switched data line, or a packet switched data line.

The communication component 402 can operate as a data server providing information on the current operating state and performance of the key decryption system 106 and programmable devices 108 over time. In an embodiment, the communication component 402 is able to respond to external queries. For example, the central controller 404 can request data regarding number or types of programmable devices 108 reprogrammed. In yet another aspect, the communication component 402 provides output to the central controller 404 or other external device at regular intervals or when specific operating conditions are reached. For example, after reprogramming a predetermined number of programmable devices 108 or after experiencing a failure in reprogramming a programmable device 108.

In certain embodiments, the central controller 404 is maintained by the manufacturer, or central distributor. In this manner, manufacturers track installation of reprogramming components 104, monitoring and tracking distribution of reprogram data 110. Such tracking information is useful, particularly in identifying potential problems. For example, such tracking information allows manufacturers to determine whether remote field locations are utilizing proper reprogram data 110. The central controller 404 can include a user interface (not shown). The central controller 404 can alert operators to possible problems. In yet another embodiment, the central controller 404 is included in or in communication with a key encryption system 102.

In another embodiment, the communication component 402 receives data transmissions from the central controller 404. Such data transmission can include a reprogramming component 104. For example, the reprogramming component 104 can be transmitted *via* a wireless local area network (WLAN), wide area network (WAN) or any other wired or wireless interface. Consequently, the reprogramming component 104 is generated at the manufacturer and distributed on memory devices, through a WAN, the Internet, or any other network system. In still another embodiment, the communication component 402 requests or queries the central controller 404, a website, remote database or other source of data to determine when a reprogramming component 104 is available and/or obtain reprogramming components 104.

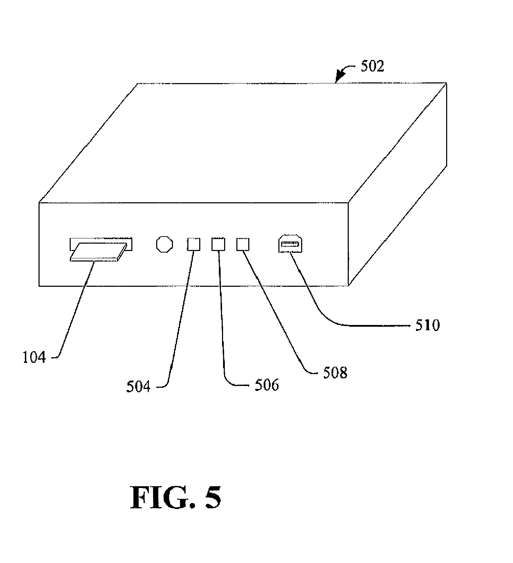

Referring now to FIG. 5, a perspective view of a reprogramming device 502 that encompasses the key decryption system 106 is illustrated. In an embodiment, the reprogramming device 502 contains a processor, non-volatile memory, a predefined amount of RAM, and a connection means 510 for connecting to a vehicle's programmable device 108. The reprogramming device 502 detects the presence of a reprogramming component 104 and valid reprogram data 110 contained thereon. In another embodiment, upon initial power up, the reprogramming device 502 enters its reprogramming mode.

In an embodiment of the reprogramming device 502, the user interface 310 is implemented as a plurality of lights to indicate the status of the reprogramming of an programmable device 108. In one embodiment, the reprogramming device 502 has a red light 504, a yellow light 506, and a green light 508. The red light 504 indicates that the reprogramming device 502 has attempted to reprogram a programmable device 108, but that the reprogramming process failed. The yellow light 506 indicates that the reprogramming device 502 is connected to a programmable device 108, but that the reprogramming device 502 determined that the programmable device 108 did not require new reprogram data 110 such that no reprogramming was performed. The green light 508 indicates that the reprogramming device 502 is connected to a programmable device 108 and that the reprogramming device 502 successfully completed reprogramming the programmable device 108

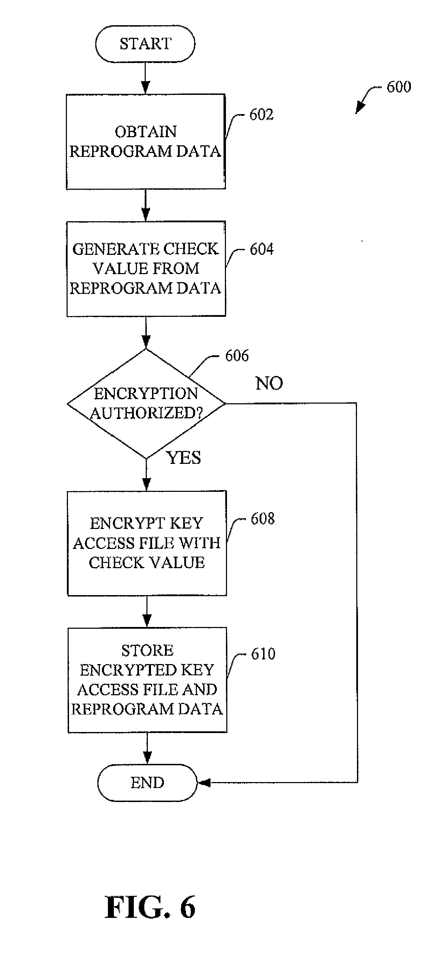

With reference to FIGs. 6-8, flowcharts depicting methodologies associated with reprogramming of an programmable device are illustrated. For simplicity, the flowcharts are depicted as a series of steps or acts. However, the methodologies are not limited by the number or order of steps depicted in the flowchart and described herein. For example, not all steps may be necessary; the steps may be reordered, or performed concurrently.

Turning now to FIG. 6, an exemplary methodology 600 for generating a reprogramming component 104 is illustrated. At reference number 602, reprogram data 110 for installation on a programmable device 108 is obtained. The reprogram data 110 can be generated using any suitable programming language and can include data as well as program executable code, scripts and the like. In an embodiment, reprogram data 110 is obtained from a software data store 202 that maintains software and data for various programmable devices.

A check value is generated from the reprogram data 110 to be used for reprogramming of the programmable device 108 at reference number 604. In an embodiment, the check value is generated utilizing a one-way hash function. Consequently, the generated check value can be used to verify the contents of the reprogram data 110, ensuring that the reprogram data 110 remains unchanged between initial generation of the check value at the key decryption system 106 and installation at a remotely located programmable device 108.

At reference number 606, a determination is made as to whether encryption of the access key file 112 and generation of the reprogramming component 104 is authorized. The authorization determination can be based upon input or data obtained from the operator or entity directing creation of the reprogramming component 104. For example, a human operator controlling a key decryption system 106 may be required to enter a pass code or provide biometrics (e.g., fingerprint, retinal, DNA, voice or image recognition) to identify the operator and/or verify authority to generate reprogramming components 104. An authorization component 210 can determine authority of the individual based upon the verified identity. In an embodiment, the authorization component 210 determines authority based upon individual identity, position or title and the like. In a further embodiment, the authorization component 210 includes a lookup table that that provides authorization information based upon identity. If it is determined that the entity lacks proper authorization, the process halts. Conversely, if authorization is verified, the process continues at reference number 608.

At reference number 608, the access key file 112 is encrypted utilizing the check value generated based upon the reprogram data 110 used to reprogram the programmable device 108. The encrypted access key file 112 can be generated utilizing any suitable encryption methodology (e.g., AES, DES and the like). Use of the check value derived from the reprogram data 110 binds the reprogram data 110 to the decryption of the encrypted access key file 112. This ensures that the permissions necessary to unlock the programmable device 108 for reprogramming are available only for installation of unmodified reprogram data 110.

The reprogram data 110 and encrypted access key file 112 are stored in a reprogramming component 104 at reference number 610. In an embodiment, storing the reprogram data 110 and encrypted access file 112 includes writing the data and files to a memory device, such as a SD card, a flash memory device, a CD-ROM, floppy disk and the like. In another embodiment, the reprogramming component 104, including the reprogram data 110 and encrypted access key file 112, is maintained for transmission directly to the key decryption system 106.

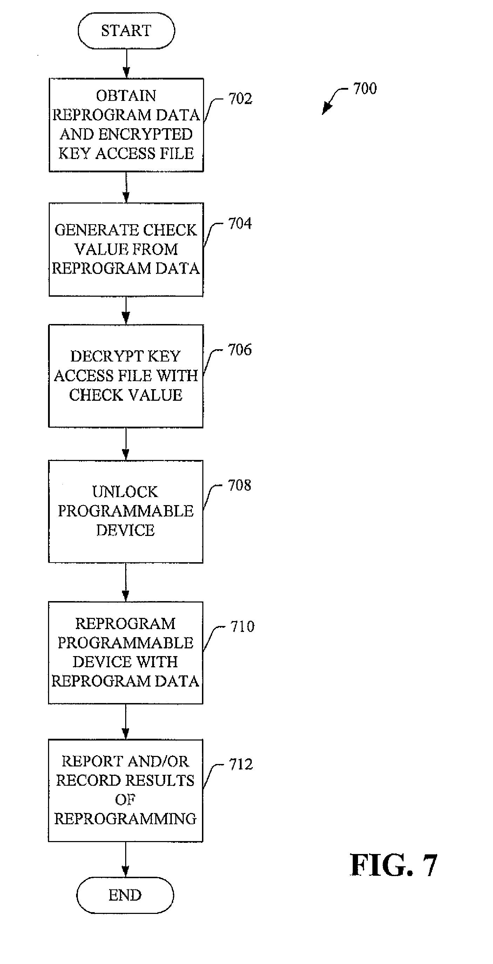

FIG. 7 is an exemplary flowchart illustrating a methodology 700 for reprogramming a programmable device 108 using a reprogramming component 104. At reference number 702, the reprogram data 110 and encrypted access key file 112 are obtained. In an embodiment, the reprogram data 110 and encrypted access key file 112 are retrieved from a memory device, such as an SD card or other flash memory device. In another embodiment, the reprogramming component 104, including the reprogram data 110 and encrypted access key file 112, is transmitted to the key decryption system 106. For example, the key decryption system 106 can query or request a reprogramming component 104. Alternatively, when a reprogramming component 104 becomes available, it can be automatically transmitted to key decryption components 106. Upon receipt of a reprogramming component 104, the reprogram data 110 and encrypted access key file 112 can be obtained.

At reference number 704, the check value is generated from the reprogram data 104. The check value is generated utilizing the same algorithm used in the key encryption system 102. Consequently, if the reprogram data 110 is unchanged since the reprogramming component 104 was generated, the check value will be identical to that generated during encryption of the encrypted access key file 112. The check value is used to decrypt the encrypted access key file 112 at reference number 706. The encrypted access key file 112 will only be successfully decrypted if the check value is the same as that used to encrypt the access key file 112 at the key encryption system 102. Consequently, successful decryption serves as verification that the reprogram data 110 has not been modified or tampered with after encryption of the access key file 112. Any change to the reprogram data 110 results in a different check value, which could not be used to decrypt the encrypted access key file 112.

Once the encrypted access key file 112 is decrypted, the programmable device 108 is unlocked at reference number 708. If the access key file 112 includes only a single key, this entails simply obtaining permission using the decrypted access key file. Once unlocked, the programmable device 108 is reprogrammed utilizing the reprogram data 110 at reference number 710. In one embodiment, reprogramming comprises overwriting the current programming of the programmable device 108 with at least a portion of the reprogram data 110. In another embodiment, reprogramming consists of overwriting only certain files on the programmable device 108 and/or modifying certain data values. For example, specific threshold values can be adjusted or modified.

At reference number 712, the results of the reprogramming process can be reported or recorded. In an embodiment, failure or success in reprogramming the programmable device 108 is indicated *via* a user interface 310. In a further embodiment, the user interface 310 includes one or more lights 504, 506, 508 that indicate success or failure, in which case the appropriate lights are illuminated at reference number 712. Any other suitable user interface 310 can be utilized including, but not limited to, a monitor that displays results of reprogramming.

In addition, the results of the reprogramming process can be recorded in a log *via* the logging component 312. Results of the reprogramming process may include success or failure, the type or programmable device 108 reprogrammed, the reprogramming component 104 utilized, the operator or key decryption system 106 attempting reprogramming, the date and time and/or any other useful information. The log can be implemented using memory (e.g., CD-ROM, tape, hard disk and the like). The log can be provided to the manufacturer to verify successful reprogramming and track installation of updated reprogram data 110. In another embodiment, the log is remotely located from the key decryption system 106. For example, a central log is maintained by the manufacturer.

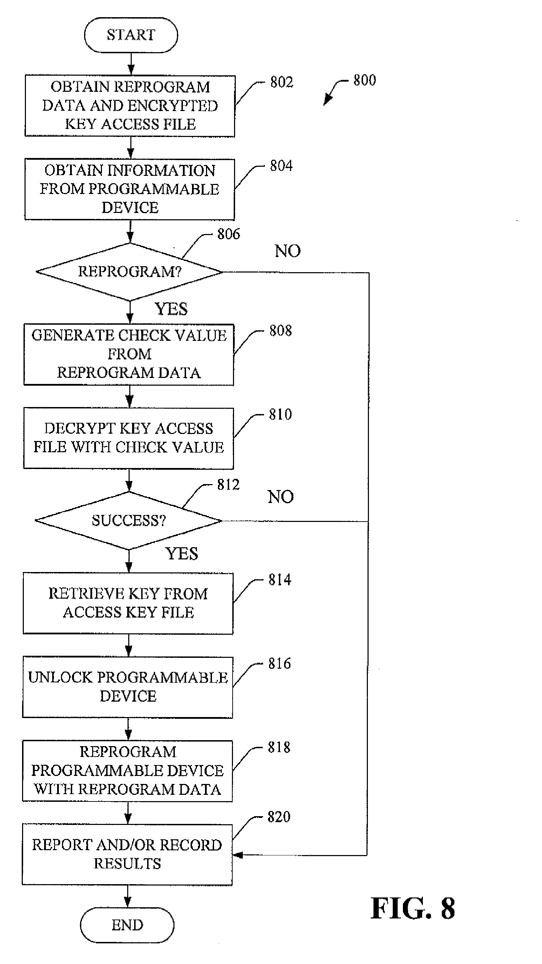

Turning now to FIG. 8, another exemplary methodology 800 for reprogramming a programmable device is illustrated. At reference number 802, the reprogram data 110 and encrypted access key file 112 is obtained from a reprogramming component 104. As described above, the reprogramming component 104 can be implemented as a memory device and the reprogram data 110 and encrypted access key file 112 can be retrieved from the reprogramming component 104. Alternatively, the reprogramming component 104 is transmitted to the key decryption system 106 *via* a communication component 402.

At reference number 804, information regarding the state of the programmable device 108 is obtained from the programmable device 108. Many manufacturers utilize multiple programmable devices 108, each type of programmable device 108 may be assigned a unique identifier. This identifier may be retrieved from the programmable device 108 and used to determine appropriate programming for the programmable device 108. In addition, the retrieved information may indicate the current version of data programmed in the programmable device 108. At reference number 806, a determination is made as to whether the programmable device 108 is to be reprogrammed. The determination is based in part upon the information obtained from the programmable device 108 and the reprogram data 110. For example, if the programmable device 108 already has the current programming there is no need to reprogram the programmable device 108. If the programmable device 108 is not to be programmed, the process continues at reference number 820 where the results of reprogramming are reported or recorded.

If the programmable device 108 is to be reprogrammed, the process continues at reference number 808, where the check value is generated from the reprogram data 110. The check value is generated utilizing the same algorithm used in the key encryption system 102. Consequently, if the reprogram data 110 has remained unchanged since the reprogramming component 104 was generated, the check value is identical to that generated during encryption of the encrypted access key file 112. The check value is used to decrypt the encrypted access key file 112 at reference number 810.

At reference number 812, a determination is made as to whether the decryption was successful. The encrypted access key file 112 will only be successfully decrypted if the check value is the same as that used to encrypt the access key file 112 at the key encryption system 110. Consequently, successful decryption serves as verification that the reprogram data 110 has not been modified or tampered with after encryption of the access key file 112. Any change to the reprogram data 110 will result in a different check value, which can not be used to decrypt the encrypted access key file 112. Therefore, if the decryption is unsuccessful, the process will continue at reference number 820 where the failure in programming is reported and/or recorded.

If the decryption of the encrypted access key file 112 is successful, the process continues at reference number 814, where an access key is retrieved from the decrypted access key file based at least in part upon the information obtained from the programmable device 108. In certain embodiments, the access key file contains multiple keys for a variety of programmable devices 108. Frequently, manufacturers utilize multiple programmable devices 108. To enhance security, individual keys are used for the different types of programmable devices 108. The keys may be contained in a single file, such as the access key file 112. In a further example, the access key file includes a lookup table that contains the keys for multiple types of programmable devices 108. The information obtained from the programmable device 108 at reference number 804 includes the key identifier used to retrieve the particular key or permission to program the programmable device 108. For example, the key identifier is used an index into the lookup table of the key access file 112 to retrieve the specific permission to unlock the programmable device 108.

At reference number 816, the programmable device 108 is unlocked using the retrieved key. Once unlocked, the programmable device 108 is reprogrammed utilizing the reprogram data 110 at reference number 818. In one embodiment, reprogramming comprises overwriting the current programming of the programmable device 108 with at least a portion of the reprogram data 110. In another embodiment, reprogramming consists of overwriting only certain files on the programmable device 108 and/or modifying certain data values. For example, specific threshold values can be adjusted or modified.

In yet another embodiment, during reprogramming at reference number 818, a portion of the reprogram data 110 is selected for use in reprogramming the programmable device 108. The reprogram data 110 can include data, software files or information intended for different classes or types of programmable devices 108. Alternatively, reprogram data 110 can include multiple versions intended for use depending upon the level or version of data currently maintained on the programmable device 108. Accordingly, information retrieved from the programmable device 108 is used to determine the appropriate portion of the reprogram data 110 for use in programming the programmable device 108.

At reference number 820, the results of the reprogramming process can be reported or recorded. As described in detail above, failure or success in reprogramming the programmable device 108 can be indicated *via* a user interface 310. In addition, the results of the reprogramming process can be recorded in a log *via* a logging component 312. Results of the reprogramming process may include success or failure, the type of programmable device 108 reprogrammed, the reprogramming component 104 utilized, the operator or key decryption system 106 attempting reprogramming, the date and time and/or any other useful information. The log can be implemented using memory (e.g., CD-ROM, tape, hard disk and the like). The log can be provided to the manufacturer to verify successful reprogramming and track installation of updated reprogram data 110. [00080] While various embodiments have been described above, it should be understood that the embodiments have been presented by way of example only, and not limitation. It will be understood by those skilled in the art that various changes in form and details may be made therein without departing from the spirit and scope of the subject matter described herein and defined in the appended claims. Thus, the breadth and scope of the present invention should not be limited by any of the above-described exemplary embodiments, but should be defined only in accordance with the following claims and their equivalents.

## Claims

1. A system that performs controlled reprogramming of a programmable device, comprising:
a check value generator component (204) that generates a check value as a function of a file (110) to be used to reprogram the programmable device (108);
an encryption component (206) that encrypts a key set as a function of said check value, generating an encrypted key set (112) adapted to control permission for reprogramming the programmable device (108) using said file (110) based at least in part upon said check value derived from said file (110); and
an output component (212) that outputs a reprogramming component (104) that includes said file (110) and said encrypted key set (112), said reprogramming component (104) is adapted to control reprogramming of the programmable device (108).

2. The system of claim 1, further comprising an authorization component (210) that authorizes output of said file and said encrypted key set (112) to said reprogramming component (104).

3. The system of claim 1, said key set (112) includes reprogramming permissions for a plurality of types of said programmable device (108).

4. The system of claim 1, further comprising means for storing said reprogramming component (104) for use at a remote location.

5. A system that performs controlled programming of a programmable device, comprising:
a check value component (304) that obtains a check value as a function of a program file (110) to be installed on the programmable device (108);
a decryption component (306) that comprises means for receiving a key identifier (314) from the programmable device (108) and means for decrypting (306) an access key file (112) as a function of said check value, generating a decrypted access key file, said key identifier is adapted to obtain a key for the programmable device (108) from said decrypted access key file; and
a program component (308) that installs said program file (110) on the programmable device (108) based at least in part upon said key.

6. The system of claim 5, said access key file (112) includes at least one lookup table and said key identifier is an index into said at least one lookup table.

7. The system of claim 5, said check value component (304) computes said check value from said program file (110) utilizing a hash function.

8. The system of claim 5, further comprising means for storing (312) data related to installation of said program file (110) on the programmable device (108).

9. The system of claim 5, further comprising means for alerting a user (310) to a result of installation of said program file (110) on the programmable electronic device (108).

10. The system of claim 5, said decryption component (306) further comprises means for receiving a status from the programmable device (108), said program component (308) installs said program file (110) as a function of said status.

11. A method for secure programming of a programmable device, comprising:
generating (604) a check value as a function of a program file to be used to program the programmable device; and
encrypting (608) a key file to generate an encrypted key file that is adapted to control permission for programming the programmable device with said program file, said permission is based at least in part upon said check value generated from said program file.

12. The method of claim 11, further comprising transmitting (702) said encrypted key file and said program file to the programmable device.

13. The method of claim 11, further comprising storing (610) said encrypted key file and said program file on a storage device.

14. The method of claim 11, further comprising authorizing (606) encryption of said key file.

15. The method of claim 14, further comprising detecting (606) presence of a hardware key that provides authorization for encryption of said key file.

16. A method for controlled programming of a secured programmable device, comprising:
determining (704) a check value for reprogramming data;
decrypting (706) a key file based at least in part upon said check value to generate a decrypted key file;
obtaining (708) a permission to program the programmable device as a function of said decrypted key file; and
programming (710) the programmable device based at least in part upon the reprogramming data as a function of said permission.

17. The method of claim 16, further comprising:
obtaining (804) a key identifier from the programmable device; and
selecting a key (814) from said decrypted key file based at least in part upon said key identifier, said key is used in obtaining said permission.

18. The method of claim 17, said decrypted key file comprises a lookup table that includes said key, said key identifier is an index into said lookup table.

19. The method of claim 16, further comprising alerting (820) a user to a result of programming the programmable device.

20. The method of claim 16, further comprising recording (820) a result of programming the programmable device.

21. The method of claim 16, further reporting (820) a result of programming the programmable device to a remote location.

22. The method of claim 16, further comprising obtaining (804) a status from the programmable device, said programming the programmable device is based at least in part upon said status.
